(19) Europäisches Patentamt / European Patent Office / Office européen des brevets

(11) **EP 1 961 138 B1**

(12) **FASCICULE DE BREVET EUROPEEN**

(45) Date de publication et mention
de la délivrance du brevet:
**23.12.2009 Bulletin 2009/52**

(21) Numéro de dépôt: **06819761.5**

(22) Date de dépôt: **24.11.2006**

(51) Int Cl.:
***H04B 11/00*** *(2006.01)*    ***H04B 13/02*** *(2006.01)*

(86) Numéro de dépôt international:
**PCT/EP2006/068898**

(87) Numéro de publication internationale:
**WO 2007/060223 (31.05.2007 Gazette 2007/22)**

(54) **PROCEDE ET DISPOSITIF PERMETTANT LE SUIVI DE DOPPLER POUR MODEM A LARGE BANDE**

DOPPLER-VERFOLGUNGSVERFAHREN UND EINRICHTUNG FÜR EIN BREITBANDMODEM

DOPPLER TRACKING METHOD AND DEVICE FOR A WIDE BAND MODEM

(84) Etats contractants désignés:
**DE FR GB IT**

(30) Priorité: **25.11.2005 FR 0511968**

(43) Date de publication de la demande:
**27.08.2008 Bulletin 2008/35**

(73) Titulaire: **THALES**
**92200 Neuilly sur Seine (FR)**

(72) Inventeur: **LAURENT, Pierre-André**
**F-95550 Bessancourt (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-2005/055442    US-A- 3 810 019**
**US-A- 4 905 211    US-A1- 2001 055 352**

**Description**

L'invention concerne un procédé et un dispositif permettant le suivi Doppler, pour modem à large bande.

Plus généralement, elle concerne aussi un système d'estimation et de suivi du décalage en fréquence pour un système de transmission dont la largeur de bande n'est pas « négligeable » devant la fréquence centrale.

Le problème posé est la transmission de données de type quelconque entre deux correspondants immergés dans l'eau et à un débit de plusieurs centaines de bits par seconde tout en utilisant une bande passante aussi faible que possible et une puissance de calcul réduite au minimum, en particulier pour des équipements autonomes fonctionnant sur batteries.

Le problème est aussi celui de la transmission de données entre deux correspondants immergés dans un milieu donné.

Les ondes électromagnétiques classiquement utilisées (de quelques centaines de kHz à quelques GHz se propageant extrêmement mal dans l'eau, le modem (modulateur-démodulateur) utilise donc des ondes acoustiques pour véhiculer les messages transmis.

Pour rappel, le milieu sous-marin a un comportement extrêmement complexe pour les ondes acoustiques. Ses inhomogénéités (salinité, température, courants, ..) font que le chemin suivi par les ondes n'est une ligne droite qu'à très courte distance et que ce trajet varie au cours du temps.

Les ondes qui arrivent au récepteur peuvent suivre plusieurs trajets avec des délais très différents. Ces trajets peuvent être soit « directs » (plusieurs parcours différents convergeant vers le récepteur), soit « indirects » (réflexions sur la surface de l'eau, éventuellement agitée de vagues, ainsi que sur le fond qui peut avoir toutes sortes de types de reliefs).

Dans la pratique, cela se traduit par l'arrivée au récepteur de nombreuses répliques du signal émis, chacune ayant à un instant donné, une amplitude, une phase, un retard et un décalage fréquentiel propre.

A ceci, il faut ajouter, éventuellement, un décalage fréquentiel dû à la vitesse radiale relative des correspondants (effet Doppler) ainsi qu'un décalage fréquentiel pseudo périodique dû à la houle dans le cas où l'un au moins des correspondants est à la surface.

Dans certains cas, la fiabilité de la transmission doit être quasi parfaite. S'il s'agit d'un texte, on peut tolérer quelques erreurs isolées, car elles seront automatiquement corrigées par le lecteur. Lorsqu'il s'agit d'un fichier binaire (par exemple une image JPEG), le taux d'erreurs exigé est voisin de 0, sous peine de très forte dégradation de l'image.

De plus, le système est « à large bande ». Dans les applications pratiques, la largeur de bande du signal émis n'est pas négligeable comparée à la fréquence centrale d'émission. Le décalage Doppler étant proportionnel à la fréquence, les fréquences basses ont un décalage en fréquence plus faible que les fréquences hautes.

Qui plus est, la vitesse relative de l'émetteur et du récepteur n'étant pas toujours négligeable par rapport à la vitesse du son dans l'eau (environ 1500 m/s) on observe un effet de dilatation ou de contraction du temps selon le signe de la vitesse relative.

Par exemple, un message émis pendant une durée de 10s sera reçu pendant 10.13 secondes si la vitesse d'éloignement est de + 10 m/s (36 km/h ou environ 20 noeuds) ce qui pose des problèmes de suivi de synchronisation.

A la connaissance du demandeur, il existe des systèmes de type « à étalement de spectre » dans lesquels le débit utile est très faible comparé à la bande passante utilisée et où la discrétion est de mise, ce qui interdit l'utilisation de porteuses fixes, facilement repérables.

La demande de brevet WO 2005/055442 divulgue un système « à large bande » qui estime une seule fois et pour toute la durée du message une valeur de décalage Doppler sans effectuer de suivi.

L'objet de la présente invention concerne notamment un procédé permettant d'estimer en continu le décalage en fréquence (Doppler) pour un modem fonctionnant en milieu sous-marin.

L'invention concerne notamment un système d'estimation et de suivi du décalage en fréquence selon la revendication 1.

L'invention concerne aussi un procédé permettant d'estimer et de suivre l'effet Doppler selon la revendication 2.

Le procédé comporte par exemple une étape où l'on interpole la valeur lissée à des instants intermédiaires au moyen de filtres passe-bas dérivés du filtre défini précédemment.

L'étape de filtrage 1 comporte, par exemple, au moins les étapes suivantes :

- On effectue le fenêtrage du signal d'entrée par une fenêtre de Hanning (simple cosinus sur-élevé) sur une durée de 160 ms, avec recouvrement de 80 ms entre deux fenêtres successives,

- aux 1.024 points obtenus, on ajoute 3.072 points nuls, puis :

- on effectue la transformée de Fourier rapide FFT 4096 points sur ce signal dont la sortie est notée $Z_0$, $Z_1$ ... $Z_{4095}$

- pour une fréquence centrale $F_{n,p}$ souhaitée, on calcule le rang n du "bin" $Z_n$ de la transformée de Fourier FFT qui est juste inférieur,

- on calcule le nombre réel x compris entre 0 et 1 qui vaut $(F_{n,p} - 1.5625 n)/1.5625$ et l'on sélectionne deux nombres complexes z0(x) et z1 (x) fonctions de x,

- on détermine la sortie du filtre par z0(x) Zn + z1(x) Zn+1.

Le procédé et le système selon l'invention présentent notamment les avantages suivants. Ils permettent d'effectuer des communications sous-marines de longue durée, à Doppler variable, entre un émetteur et un récepteur en déplacement sur des trajectoires quelconques.

D'autres caractéristiques et avantages de la présente invention seront mieux compris à la lecture de la description qui suit d'un exemple de réalisation donné à titre illustratif et nullement limitatif, annexé des figures qui représentent :

- La figure 1, dans un espace temps-fréquence, l'effet du décalage sur les porteuses,
- La figure 2, un exemple de structure des modules et des étapes mises en oeuvre par le système selon l'invention,
- La figure 3, une étape de filtrage du signal par fenêtrage du signal d'entrée,
- La figure 4, un exemple de sorties des détecteurs,
- La figure 5, un exemple des sorties des sommateurs,
- La figure 6, un exemple de régression parabolique,
- Les figures 7 à 9, les résultats du filtrage final, et
- La figure 10, un exemple de réponse en fréquence obtenue.

Afin de mieux faire comprendre le principe mis en oeuvre dans l'invention, l'exemple qui suit est donné pour un modem fonctionnant en milieu sous-marin, caractérisé par un étalement temporel important et rapidement variable et une largeur de bande non négligeable devant la bande passante qui rend le décalage en fréquence du à l'effet Doppler variable dans la bande passante même du signal (effet « bande large »).

La forme d'onde émise par le modem en question inclut des porteuses fixes (non modulées) de niveau sensiblement supérieur à celui des porteuses véhiculant l'information. C'est à partir de ces porteuses que se fait l'estimation du décalage Doppler moyen du signal, décalage susceptible de varier rapidement.

Les porteuses de référence sont en nombre égal à N et ont des fréquences notées $F_0$, $F_1$, ... $F_{N-1}$.

Le décalage Doppler maximum est donné par un nombre sans dimension, noté δ, obtenu par l'équation :

$$\delta = \frac{v_r(R) - v_r(E)}{C - v_r(R)}$$

C : vitesse du son dans l'eau

$v_r(E)$ : vitesse radiale de l'émetteur

$v_r(R)$ : vitesse radiale du récepteur

Référentiel : l'eau, supposée immobile

En présence d'un tel décalage Doppler, chaque porteuse de fréquence $F_i$ voit sa fréquence modifiée en $(1 + \delta) F_i$.

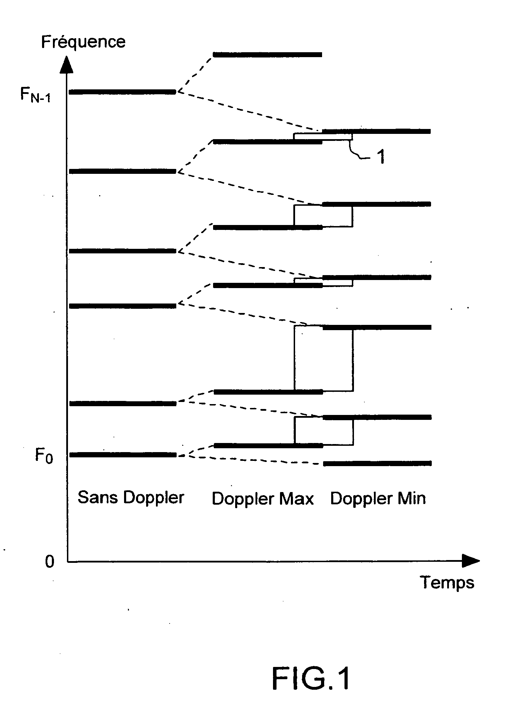

La figure 1 décrit dans un espace temps-fréquence, l'effet du décalage Doppler sur les porteuses, pour $\delta = -\delta_{max}$, d = 0, et d = $+\delta_{max}$, $\delta_{max}$ étant un élément de conception du système.

Les fréquences choisies peuvent être quelconques, mais, afin que l'estimation de δ puisse se faire sans ambiguïté, il faut que les petits rectangles 1 de la figure 1 aient une hauteur positive, ce qui se traduit par la condition simple suivante :

$$(1 - \delta_{max}) F_n > (1 + \delta_{max}) F_{n-1}$$

ou

$$F_n - F_{n-1} > \delta_{max} (F_n + F_{n-1})$$

n = 1 ... N-1

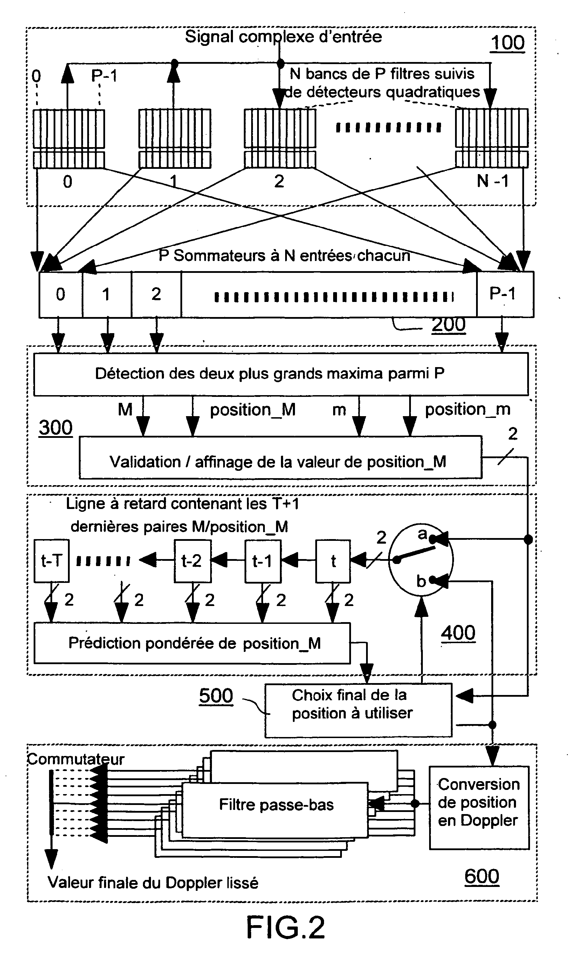

La figure 2 représente les différentes étapes mises en oeuvre dans l'invention et les éléments constituant le dispositif.

Ce système nécessite la présence, pendant toute la durée du message et même un peu plus, d'un ensemble de N porteuses fixes non modulées en sus du signal utile.

Le signal complexe (porteuses de référence et signal utile) est reçu sur une chaîne de traitement comportant, dans cet ordre :

- un ensemble, 100, de N bancs de P filtres passe-bande couvrant (légèrement plus que) au moins l'ensemble des valeurs que peuvent prendre les fréquences $F_0$ ... $F_{N-1}$ après décalage Doppler.
  Chaque filtre passe-bandes est suivi d'un détecteur quadratique d'enveloppe non représenté distinctement des filtres sur la figure pour des raisons de simplification.
- un ensemble 200, de P sommateurs additionnant les sorties des détecteurs quadratiques d'enveloppe de même rang pour chaque filtre,
- un système 300, de détection de la position des deux plus grands maxima parmi les P sommes et de validation de leurs positions en sortie de la série de sommateurs,
- un système 400 de mémorisation des positions et de leurs « poids » et de prédiction de la valeur courante,
- un système 500 de validation / remplacement de la position trouvée,
- un système 600 convertissant les positions en Doppler estimé et filtrant celui-ci par filtre bas qui donne une estimation du décalage Doppler (avec un retard fixe).

Le mécanisme d'estimation et de suivi peut aussi inclure un mécanisme d'interpolation permettant de disposer plus fréquemment d'échantillons de décalage Doppler.

Le détail des différents éléments faisant partie du système selon l'invention est donné ci-après.

**Bancs de filtres 100**

Un banc de filtres est adapté notamment à couvrir les fréquences comprises entre $(1 - \delta_{max}) F_n$ et $(1 + \delta_{max}) F_n$ où $F_n$ est la fréquence après décalage Doppler pour le banc de filtre de rang n.

Chaque banc de filtres comporte, par exemple, le même nombre P de filtres passe-bande de fréquences centrales régulièrement espacées. Le $p^{ème}$ filtre du $n^{ème}$ banc sera centré sur une fréquence égale à :

$$F_{n, p} = F_n \left( 1 + \delta_{max} \left( \frac{2p - P + 1}{P} \right) \right)$$
$$n = 0 ... N\text{-}1$$
$$p = 0 ... P\text{-}1$$

$F_n$ : la fréquence après décalage Doppler pour le banc de filtre de rang n.

Une manière simple de réaliser le banc de filtres est décrite ci-dessous.

A titre d'exemple, on suppose que les porteuses sont espacées d'un multiple de 25 Hz et que la fréquence d'échantillonnage est de 6.400 Hz.

On suppose que, lors de la phase de démodulation, un nouveau symbole apparaît toutes les 80 ms et que l'on a alors besoin d'une nouvelle valeur du décalage en fréquence.

En supposant que la démodulation de phase différentielle peut avoir jusqu'à 4 états de phase, soit au minimum 90 °. Si l'erreur d'estimation du décalage en fréquence vaut dF, la rotation de phase supplémentaire qu'il introduit est de 360° x 80 ms x dF.

Pour qu'elle ne dépasse pas le quart de la rotation minimum (règle empirique issue de l'expérience), l'erreur d'estimation du décalage en fréquence dF doit valoir au maximum $df_{MAX} = 0.78125$ Hz (en valeur absolue), ce qui signifie que la transformée de Fourier rapide, FFT, à utiliser doit pouvoir séparer deux fréquences séparées de 2 $df_{MAX} = 1.5625$ Hz. Son nombre de points devrait alors être d'au moins 6.400/1.5625 = 4.096.

Pour cela, on procède de la manière suivante :

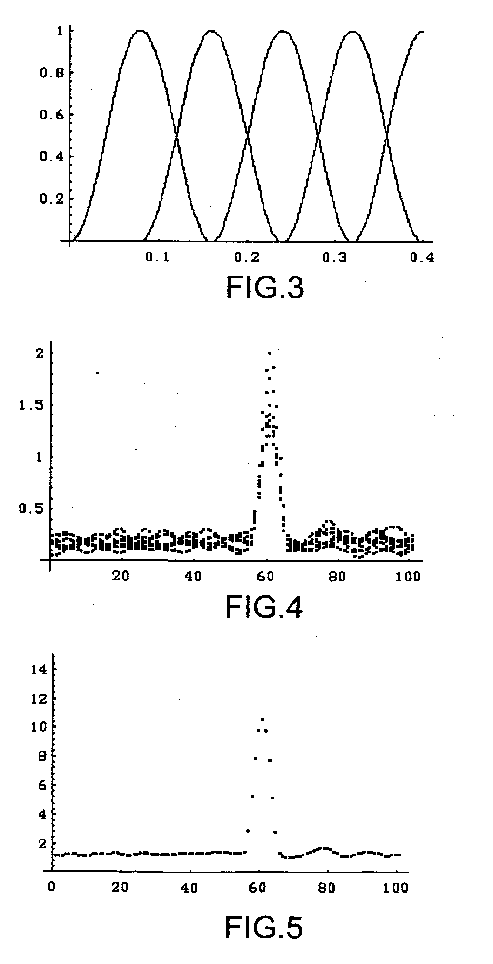

- On effectue le fenêtrage (pondération) du signal d'entrée par une fenêtre de Hanning (simple cosinus sur-élevé) sur une durée de 160 ms, avec recouvrement de 80 ms entre deux fenêtres successives. Cette étape est illustrée à la figure 3.

- aux 0.16 x 6.400 = 1.024 points obtenus, on ajoute 4.096 - 1.024 = 3.072 points nuls, puis :

  1. on effectue la transformée de Fourier rapide FFT 4096 points sur ce signal dont la sortie est notée $Z_0$, $Z_1$ ... $Z_{4095}$,

  2. pour une fréquence centrale $F_{n,p}$ souhaitée, on calcule le rang n du "bin" $Z_n$ de la transformée de Fourier FFT qui est juste inférieur, c'est à dire celui pour lequel $F_n$, est comprise entre n fois 1.5625 Hz et (n + 1) fois 1.5625 Hz,

  3. on calcule le nombre réel x compris entre 0 et 1 qui vaut ($F_{n,p}$ - 1.5625 n) / 1.5625 et l'on sélectionne deux nombres complexes z0(x) et z1 (x) fonctions de x (et pré-calculés par commodité),

  4. la sortie du filtre est simplement donnée par z0(x) Zn + z1 (x) Zn+1.

Les coefficients z0 et z1 sont optimisés afin que le résultat soit aussi proche que possible de celui que donnerait un filtre réellement centré sur $F_{n,p}$.
L'un des deux coefficients z0 ou z1 peut être choisi REEL (et l'autre corrigé en conséquence) puisque la phase du signal de sortie est sans importance.
Chaque filtre est suivi d'un détecteur quadratique d'enveloppe donnant le carré du module de sa sortie (le traitement est généralement fait sur un signal complexe, en bande de base, i.e. centré sur la fréquence 0).
La sortie du p^ème détecteur du n^ème banc sera notée $e_{n,p}$.
La figure 4 donne un exemple de sorties des détecteurs quadratique d'enveloppe, pour P = 100, et N = 7 fréquences, avec un signal d'entrée décalé vers les hautes fréquences.

**Sommateurs 200**

La sortie du p^ème sommateur est donnée par :

$$Sp = \sum_{n=0}^{N-1} e_{n,p}$$

$p = 0....P$-1
avec $e_{n,p}$.la sortie du p^ème détecteur du n^ème banc de filtre.
La figure 5 représente un exemple des sorties des sommateurs pour le cas représenté sur la figure 4, où l'on voit bien l'effet de lissage apporté par la sommation (du fait de la propagation, le gain peut varier beaucoup au voisinage de chacune des N porteuses).

**Détection des deux plus grands maxima parmi P 300**

Le signal issu des sommateurs 200 est transmis à un système de détection des maximas 300 ayant notamment pour fonction de rechercher Deux maxima.
En effet, s'il existe deux maxima d'amplitudes voisines, ils sont en général de faible amplitude et ne correspondent à rien de précis : il y a probablement uniquement du bruit en entrée du récepteur.
Pour la recherche de ces deux maximas, M (le plus grand) et m (le second plus grand), le procédé peut utiliser l'algorithme suivant, écrit en langage C simplifié.

```
/* Initialisation */
    M = 0
    position_M = 0
    m = 0
    position_m = 0
        /* Boucle pour rechercher un maximum aux positions 1 ... P-2 */
    pour(i = 1 1 à P - 2){
        si(S(i)>=S(i-1) et S(i) >= S(i + 1)){
        /* S(i) est un maximum local */
        si(S(i)>M){
```

```
/* S(i) est le nouveau plus grand maximum */
  m = M
  position_m = position_M
  M = S(i)
  position_M = i
} sinon {
  si(S(i)>m){
  /* S(i) est le nouveau second maximum */
    m = S(i)
    position_m = i
  }
}
}
}
```

Si position_M est non nul (0 est une valeur illégale) et si m est inférieur à une proportion donnée de M (par exemple 50 %), M et sa position (position_M) peuvent être considérés comme valables. On a trouvé 2 maximas.

Sinon ils sont ignorés par la suite (on se contente de mettre M à zéro).

La valeur de la position des deux maximas est ensuite affinée par exemple par régression quadratique, c'est-à-dire que les amplitudes des sommes voisines de la somme maximale M sont approximées par une parabole utilisant 3 ou 4 voisins selon le nombre de voisins disponibles, valeur désignée par la suite valeur corrigée.

Pour l'élaboration de l'algorithme de recherche, on pourra utiliser tout autre langage que le langage C.

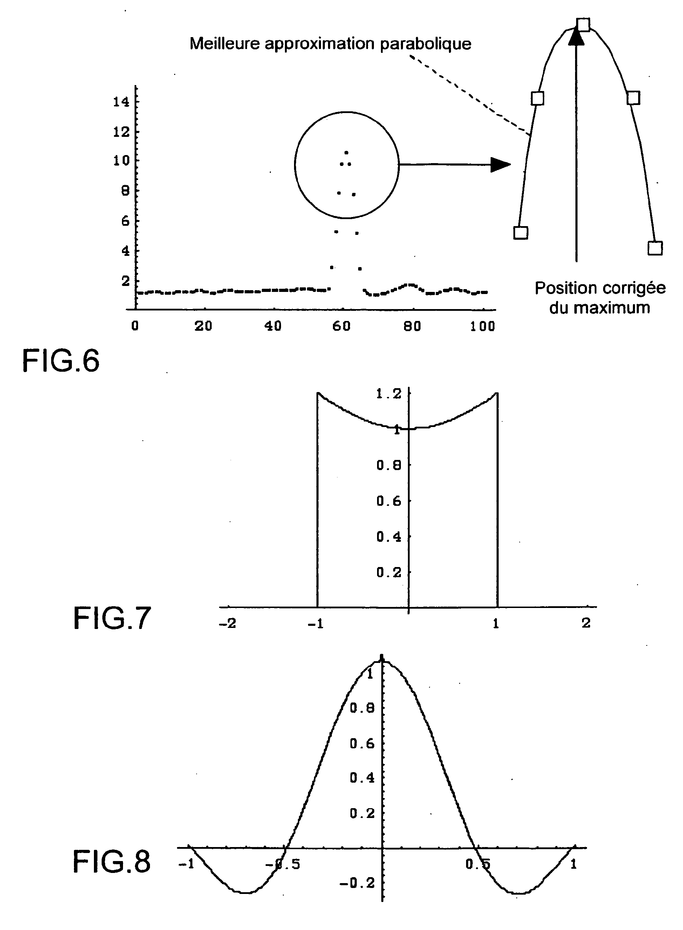

La figure 6 donne un exemple de régression parabolique, toujours sur les mêmes données des figures 4 et 5.

La position du maximum de la parabole est la valeur modifiée de position_M qui, d'entier, devient un nombre réel.

Pour position_M = 1, la correction est égale à :

$$\frac{11\ S_0 - 3\ S_1 - 7\ S_2 - S_3}{10\ (\ S_0 - S_1 - S_2 + S_3\ )}$$

Pour position_M = 2....P-3, la correction est égale à :

$$\frac{7\left(2S_{p-2} + S_{p-1} + S_{p+1} - 2S_{p+2}\right)}{10\left(2S_{p-2} - S_{p-1} - 2S_p - S_{p+1} + 2S_{p+2}\right)}$$

Pour position_M=P-2 la correction est égale à :

$$\frac{\left(S_{p-4} + 7S_{p-3} + 3S_{p-2} - 11S_{p-1}\right)}{10\left(S_{p-4} - S_{p-3} - S_{p-2} + S_{p-1}\right)}$$

En sortie du détecteur de maximas on dispose de deux valeurs de maximas et de leur position.

**Prédicteur de position 400**

Le système de prédiction / remplacement, 400, utilise la valeur de la position corrigée à l'instant t, et aux instants t - 1, t - 2, ..., t - T (t est pris entier pour la commodité des calculs et au moins égal à 4). La valeur de la position corrigée correspond à la valeur de la position déduite du maxima et affinée par régression quadratique.

Sa fonction est notamment d'évaluer, à partir du passé, la valeur probable de la position à l'instant t, en considérant d'abord les maximas de plus grande amplitude ($M_{t-1}$, $M_{t-2}$, ..., $M_{t-T}$), car les plus fiables. Il est constitué, notamment d'une ligne à retard contenant les T+1 dernières paires M/position_M.

Sachant que, sur une durée limitée, la variation du Doppler peut être assimilée localement à une parabole, on prédit la valeur de la position à l'instant t au moyen d'une régression quadratique pondérée.

Pour cela, on calcule les coefficients a, b, c d'une parabole minimisant l'erreur quadratique pondérée suivante (où la variable $pos_t$ désigne la valeur de position_M après correction) :

$$E = \sum_{i=t-T}^{t} Mi((ai^2 + bi + c) - pos_i)^2$$

La valeur prédite est simplement

$$\widehat{pos}_t = a\ t^2 + b\ t + c$$

Son calcul est simple et donné par la série d'équations suivantes :

$$U_k = \sum_{i=t-T}^{t} M_i(t-i)^k, k = 0.....4$$

$$W_k = \sum_{i=t-T}^{t} M_i pos_i(t-i)^k, k = 0.....2$$

$$\widehat{pos}_t = \frac{W_0\left(U_2 U_4 - U_3^2\right) + W_1\left(U_2 U_3 - U_1 U_4\right) + W_2\left(U_1 U_3 - U_2^2\right)}{U_0\left(U_2 U_4 - U_3^2\right) + U_1\left(U_2 U_3 - U_1 U_4\right) + U_2\left(U_1 U_3 - U_2^2\right)}$$

**Choix de la position à utiliser, 500**

La valeur prédite pour la position est transmise à un dispositif 500 de choix final de la position à utiliser. Ce dernier reçoit aussi l'information issue de l'étape de validation/affinage de la valeur de position.

Si la position corrigée est non valide, le calcul est fait avec $M_t = 0$, et l'on remplace alors la valeur prédite « $pos_t$ » par sa valeur estimée au moyen de la formule donnée ci-dessus et $M_t$ par la moyenne des valeurs précédentes.

Si la position corrigée est valide, on calcule sa valeur estimée avec la valeur mesurée de $M_t$. Si la différence entre la position estimée et la position corrigée est suffisamment faible (en valeur absolue), on garde la valeur de $pos_t$ sinon, on fait comme il a été explicité précédemment.

Ce mécanisme permet d'éliminer les valeurs aberrantes.

L'initialisation se fait avec T + 1 valeurs $M_i$ égales et petites et des valeurs $pos_t$ correspondant à un décalage en fréquence nul, soit (P - 1) / 2.

L'approximation de la variation du Doppler par une sinusoïde serait peut-être plus appropriée au canal acoustique sous-marin (à cause du caractère périodique de la houle. Les calculs sont cependant plus complexes.

La conversion de position en "Doppler" peut se faire après la correction de la position, simplement en remplaçant $pos_t$ par :

Les calculs seront les mêmes, simplement en remplaçant $pos_i$ par $\delta_i$.

$$\delta_i = \delta_{max} \left( \frac{2 \ pos_{\ j} \ - P + 1}{P} \right)$$

**Filtrage final, 600**

Ce module reçoit la valeur issue de la conversion de position en Doppler. Il comporte par exemple plusieurs filtre passe-bas et un commutateur.

La dernière étape du traitement consiste à effectuer un filtrage passe-bas conséquent sur les valeurs des décalages Doppler pour obtenir une valeur lissée finale $\delta$ aussi fidèle que possible tant que la fréquence instantanée de $\delta$ reste comprise entre deux fréquences $-F_0$ et $+ F_0$.

On utilisera par exemple un filtre passe-bas à phase linéaire avec un nombre impair de coefficients, à savoir :

$$\delta = \sum_{i=t-2K}^{i=t} h_{t-i}\delta_i$$

*avec*

$$(1) \sum_{i=0}^{i=2K} h_i = 1$$

*et*

$$(2) h_i = h_{2K-i,} i = 0....K-1$$

La condition (1) garantit qu'un décalage constant en entrée sera inchangé en sortie.

La condition (2) exprime la phase linéaire, qui garantit un retard constant quelle que soit la vitesse de variation instantanée de $\delta$. Ce retard est égal à K fois la période d'échantillonnage. Il faut lui ajouter le retard dû aux traitements précédents, notamment l'étape de filtrage pour laquelle tous les N x P filtres doivent avoir le même retard, ce qui est le cas avec l'exemple de mise en oeuvre proposé.

Pour le design exact du filtre, qui doit être aussi "plat" que possible entre $- F_0$ et $+ F_0$, on peut utiliser la méthode suivante :

1 - se donner un filtre idéal dont la réponse en fréquence est donnée par :

$$h(f) = 1 + \alpha \left( \frac{f}{F_0} \right)^2$$

$$-F_0 <= f <= +F_0$$

0 ailleurs

un exemple est donné à la figure 7 pour $F_0 = 1$ Hz et $\alpha = 0.2$.

2 - calculer sa réponse impulsionnelle (modifiée pour valoir 1 pour t = 0)

$$\theta = 2 \ \pi \ F_0 \ t$$

$$h(t) = 3 \frac{2\,\alpha\,\theta\cos(\theta) + (\theta^2(1+\alpha) - 2\,\alpha)\sin(\theta)}{(3+\alpha)\,\theta^3}$$

(avec : h(0) = 1)
donnée par :

un exemple de réponse impulsionnelle est donné à la figure 8.

3 - calculer sa réponse impulsionnelle échantillonnée à des intervalles égaux à T, et la pondérer par une fenêtre de Hamming, par exemple :

$$h_i = h\left((i-K)\,T\right)\left(0.54 + 0.46\cos\left(\pi\,\frac{i-K}{K+0.5}\right)\right)$$

i = 0 ... 2 K

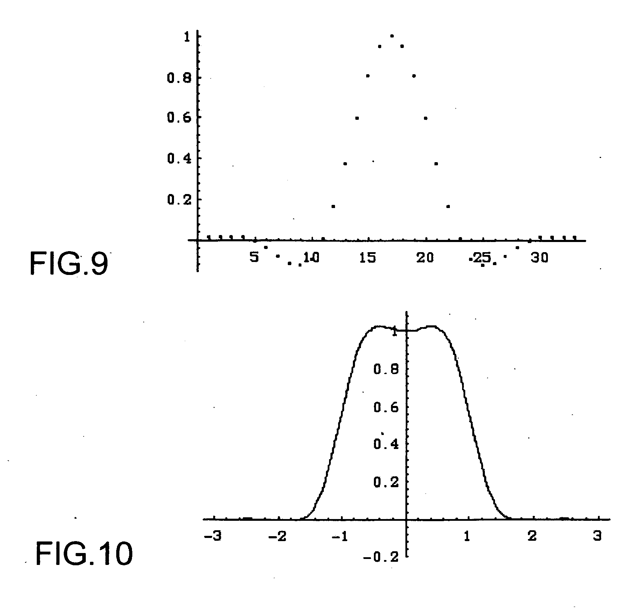

Pour T = 80 ms, et K = 16, par exemple, on a une réponse représentée à la figure 9.

4 - ajuster le coefficient $\alpha$ pour avoir une réponse en fréquence aussi plate que possible dans la bande,

5 - normaliser de telle sorte que la somme des coefficients vaille 1.

On a représenté en figure 10 un exemple de réponse en fréquence obtenue (la valeur de $\alpha$ est volontairement un peu trop élevée).

Dans le cas où l'on désirerait avoir des valeurs du Doppler à une cadence plus rapide que toutes les 80 ms, on doit utiliser une technique d'interpolation pour obtenir les valeurs intermédiaires.

La technique bien connue de l'homme de l'art et dénommée "filtres polyphases" permet d'obtenir les échantillons intermédiaires.

Dans un exemple de mise en oeuvre, les coefficients h'$_i$ d'un filtre donnant des échantillons décalés en temps sont calculables simplement par la formule générique :

$$h'_p = \frac{(-1)^{p+1}\sin(\pi\theta)}{\pi}\left(\frac{h_0}{p-\theta} + \sum_{i=1}^{K}(-1)^i h_i\left(\frac{1}{p+i-\theta} + \frac{1}{p-i-\theta}\right)\right)$$

suivante, où $\theta$ dépend du retard souhaité.

La valeur $\theta = 0$ correspond au filtre d'origine.

$$h'_p = \frac{(-1)^{p+1}\sin(\pi\theta)}{\pi}\left(\frac{h_0}{p-\theta} + \sum_{i=1}^{K}(-1)^i h_i\left(\frac{1}{p+i-\theta} + \frac{1}{p-i-\theta}\right)\right)$$

## Revendications

1. Système d'estimation et de suivi du décalage en fréquence pour un système de transmission dont la largeur de bande n'est pas négligeable devant la fréquence centrale, le système émettant une forme d'onde incluant des porteuses non modulées de niveau supérieur à celui des porteuses véhiculant l'information, les porteuses ayant des fréquences $F_0$ ... $F_{N-1}$ et le signal utile porteur de l'information , le système est **caractérisé en ce qu'**il comporte au moins les éléments suivants :

   • N bancs (100) de filtres passe-bande adaptés à couvrir l'ensemble des valeurs que peuvent prendre les fréquences $F_0$ ... $F_{N-1}$ après décalage Doppler, chaque banc comportant P filtres,

• La sortie de chaque filtre est reliée à un détecteur quadratique d'enveloppe,

• P sommateurs (200) adaptés à additionner les sorties correspondantes des N bancs de filtres,

• Un système (300) de détection de la position des deux plus grands maxima parmi les P sommes et de validation de la position du plus grand maxima,

• Un système (400) de mémorisation des positions des deux plus grands maximas et de leurs poids et de prédiction de la valeur courante de la position,

• Un système (500) de validation ou remplacement de la valur de la position trouvée selon que la position trouvée est valide ou non valide, afin, d'éliminer les erreurs aberrantes,

• un système (600) convertissant les positions en Doppler estimé et filtrant celui-ci par un filtre passe-bas.

**2.** Procédé permettant d'estimer et de suivre l'effet Doppler pour un signal composé d'une forme d'onde incluant des porteuses non modulées de niveau supérieur à celui des porteuses véhiculant l'information, les porteuses ayant des fréquences $F_0$ ... $F_{N-1}$ et du signal utile porteur de l'information dans un système de transmission dont la largeur de bande n'est pas négligeable devant la fréquence centrale, , le procédé est **caractérisé en ce qu'**il comporte au moins les étapes suivantes :

1. Transmettre le signal composite comportant le signal utile porteur de l'information et le signal de référence à N bancs (100) de filtres passe-bande adaptés à couvrir l'ensemble des valeurs que peuvent prendre les frequences $F_0$ ... $F_{N-1}$ après décalage Doppler, chaque banc compatant P filtres,

2. Déterminer pour chaque filtre, l'enveloppe du signal, $e_{n,p}$,

3. Sommer les sorties $e_{n,p}$ des bancs de filtres à l'aide de P sommateurs (200),

4. Déterminer les valeurs des deux plus grands maximas, M et m, pour plusieurs instants, t, (300),

5. Déterminer la valeur probable de la position à l'instant t, en considérant les maximas trouvés qui définissent de façon unique la valeur de décalage Doppler associée, (400, 500),

6. Effectuer un filtrage passe-bas sur les valeurs de décalage Doppler pour obtenir une valeur lissée (600).

**3.** Procédé selon la revendication 2, **caractérisé en ce qu'**il comporte une étape d'interpelation de la valeur lissée à des instants intermédiaires au moyen de filtres passe-bas dérivés du filtre de la revendication précédente.

**4.** Procédé selon la revendication 2, **caractérisé en ce que** l'étape de filtrage 1 comporte au moins les étapes suivantes :

• On effectue le fenêtrage du signal d'entrée par une fenêtre de Hanning (simple cosinus sur-élevé) sur une durée de 160 ms, avec recouvrement de 80 ms entre deux fenêtres successives,

• aux 1.024 points obtenus, on ajoute 3.072 points nuls, puis :

• on effectue la transformée de Fourier rapide FFT 4096 points sur ce signal dont la sortie est notée $Z_0, Z_1 ... Z_{4095}$,

• pour une fréquence centrale $F_{n,p}$ souhaitée, on calcule le rang n du "bin" $Z_n$ de la transformée de Fourier FFT qui est juste inférieur,

• on calcule le nombre réel x compris entre 0 et 1 qui vaut ($F_{n,p}$ 1.5625 n) /1.5625 et l'on sélectionne deux nombres complexes z0(x) et z1 (x) fonctions de x,

• on détermine la sortie du filtre par z0(x) Zn + z1(x) Zn+1.

**5.** Procédé selon la revendication 2, **caractérisé en ce qu'**il compend une étage d'affinage par régression quadratique la valeur des deux maximas trouvés.

**6.** Procédé selon la revendication 2, **caractérisé en ce que** l'étape de filtrage passe bas (600) est effectuée avec un filtre passe-bas à phase linéaire avec un nombre impair de coefficients.

## Claims

**1.** System for estimating and tracking the frequency shift for a transmission system whose bandwidth is not insignificant in relation to the central frequency, the system transmitting a waveform including unmodulated carriers of higher level than that of the carriers bearing the information, the carriers having frequencies $F_0$ ... $F_{N-1}$ and the information-carrying useful signal, the system is **characterized in that** it comprises at least the following elements:

• N banks (100) of band-pass filters suitable for covering all of the values that the frequencies $F_0$ ... $F_{N-1}$ may take after Doppler shift, each bank comprising P filters,

• the output of each filter is connected to a quadratic envelope detector,
• P adders (200) adapted for summing the corresponding outputs of the N banks of filters,
• a system (300) for detecting the position of the two largest maxima among the P sums and for validating the position of the largest maximum,
• a system (400) for storing the positions of the two largest maxima and their weights and for predicting the current value of the position,
• a system (500) for validating or replacing the value of the position found depending on whether the position found is valid or invalid, so as to eliminate the aberrant errors,
• a system (600) converting the positions into estimated Doppler and filtering the latter through a low-pass filter.

2. Method making it possible to estimate and track the Doppler effect for a signal composed of a waveform including unmodulated carriers of higher level than that of the carriers bearing the information, the carriers having frequencies $F_0 ... F_{N-1}$ and of the information-carrying useful signal in a transmission system whose bandwidth is not insignificant in relation to the central frequency, the method is **characterized in that** it comprises at least the following steps:

1. Transmitting the composite signal comprising the information-carrying useful signal and the reference signal to N banks (100) of band-pass filters adapted to cover all of the values that the frequencies $F_0 ... F_{N-1}$ may take after Doppler shift, each bank comprising P filters,
2. Determining, for each filter, the envelope of the signal, $e_{n,p}$,
3. Adding the outputs $e_{n,p}$ of the filter banks with the aid of P adders (200),
4. Determining the values of the two largest maxima, M and m, for several instants, t, (300),
5. Determining the probable value of the position at the instant t, by considering the maxima found which uniquely define the associated Doppler shift value, (400, 500),
6. Performing a low-pass filtering on the Doppler shift values so as to obtain a smoothed value (600).

3. Method according to Claim 2, **characterized in that** it comprises a step of interpolating the smoothed value at intermediate instants by means of low-pass filters derived from the filter of the preceding claim.

4. Method according to Claim 2, **characterized in that** the filtering step 1 comprises at least the following steps:

• The input signal is windowed with a Hanning window (simple raised cosine) over a duration of 160 ms, with overlap of 80 ms between two successive windows,
• the 1,024 points obtained are supplemented with 3,072 null points, and then:
• the 4096-point fast Fourier transform FFT is performed on this signal whose output is denoted $Z_0, Z_1 ... Z_{4095}$,
• for a desired central frequency $F_{n,p}$, the rank n of the immediately lower bin $Z_n$ of the fast Fourier transform FFT is calculated,
• the real number x lying between 0 and 1 which equals $(F_{n,p}-1.5625 n)/1.5625$ is calculated and two complex numbers z0(x) and z1(x) that are functions of x are selected,
• the output of the filter is determined by z0(x) Zn + z1 (x) Zn+1.

5. Method according to Claim 2, **characterized in that** it comprises a step of refining by quadratic regression the value of the two maxima found.

6. Method according to Claim 2, **characterized in that** the low-pass filtering step (600) is performed with a linear-phase low-pass filter with an odd number of coefficients.

**Patentansprüche**

1. System zur Schätzung und Verfolgung der Frequenzverschiebung für ein Übertragungssystem, dessen Bandbreite gegenüber der Mittenfrequenz nicht vernachlässigbar ist, wobei das System eine Wellenform emittiert, die nicht modulierte Träger mit einem höheren Pegel als derjenige der die Information übertragenden Träger, wobei die Träger Frequenzen $F_0 ... F_{N-1}$ haben, und das die Information tragende Nutzsignal enthält, wobei das System **dadurch gekennzeichnet ist, dass** es mindestens die folgenden Elemente aufweist:

• N Bänke (100) von Bandpass-Filtern, die geeignet sind, um die Gesamtheit der Werte abzudecken, die die Frequenzen $F_0 ... F_{N-1}$ nach Dopplerverschiebung annehmen können, wobei jede Bank P Filter aufweist,
• der Ausgang jedes Filters ist mit einem quadratischen Hüllkurvendetektor verbunden,

• P Summierglieder (200), die geeignet sind, um die entsprechenden Ausgänge der N Filterbänke zu addieren,
• ein System (300) zur Erfassung der Position der zwei größten Maxima unter den P Summen und zur Validierung der Position des größten Maximums,
• ein System (400) zur Speicherung der Positionen der zwei größten Maxima und ihres Gewichts und zur Vorhersage des laufenden Werts der Position,
• ein System (500) zur Validierung oder zum Ersatz des Werts der gefundenen Position, je nachdem, ob die gefundene Position gültig ist oder nicht, um die abweichenden Fehler zu entfernen,
• ein System (600), das die Positionen in einen geschätzten Doppler umwandelt und diesen durch ein Tiefpassfilter filtert.

2. Verfahren, das es ermöglicht, den Doppler-Effekt für ein Verbundsignal einer Wellenform zu schätzen und zu verfolgen, die nicht modulierte Träger mit einem höheren Pegel als derjenige der die Information übertragenden Träger, wobei die Träger Frequenzen $F_0 \ldots F_{N-1}$ haben, und das die Information tragende Nutzsignal enthält, in einem Übertragungssystem, dessen Bandbreite gegenüber der Mittenfrequenz nicht vernachlässigbar ist, wobei das Verfahren **dadurch gekennzeichnet ist, dass** es mindestens die folgenden Schritte aufweist:

1. Übertragung des das die Information tragende Nutzsignal enthaltenden Verbundsignals und des Referenzsignals mit N Bänken (100) von Bandpassfiltern, die geeignet sind, um die Gesamtheit der Werte abzudecken, die die Frequenzen $F_0 \ldots F_{N-1}$ nach Dopplerverschiebung annehmen können, wobei jede Bank P Filter aufweist,
2. Bestimmung, für jedes Filter, der Hüllkurve des Signals $e_{n.p}$,
3. Summierung der Ausgänge $e_{n.p}$ der Filterbänke mit Hilfe von P Summiergliedern (200),
4. Bestimmung der Werte der zwei größten Maxima M und m für mehrere Zeitpunkte t (300),
5. Bestimmung des wahrscheinlichen Werts der Position im Zeitpunkt t, unter Berücksichtigung der gefundenen Maxima, die in eindeutiger Weise den zugeordneten Dopplerverschiebungswert definieren (400, 500),
6. Durchführen einer Tiefpassfilterung an den Dopplerverschiebungswerten, um einen geglätteten Wert zu erhalten (600).

3. Verfahren nach Anspruch 2, **dadurch gekennzeichnet, dass** es einen Schritt der Interpolation des geglätteten Werts in Zwischenzeitpunkten mittels Tiefpassfiltern aufweist, die vom Filter des vorhergehenden Anspruchs abgeleitet sind.

4. Verfahren nach Anspruch 2, **dadurch gekennzeichnet, dass** der Filterungsschritt 1 mindestens die folgenden Schritte aufweist:

• Durchführung der Fensteraufteilung des Eingangssignals durch ein Hanning-Fenster (einfacher Raised-Cosine) über eine Dauer von 160 ms, mit Überlappung von 80 ms zwischen zwei aufeinanderfolgenden Fenstern,
• an den 1.024 erhaltenen Punkten, Hinzufügung von 3.072 Punkten Null, dann:
• Durchführung der schnellen Fourier-Transformation FFT 4096 Punkte an diesem Signal, dessen Ausgang mit $Z_0, Z_1 \ldots Z_{4095}$ bezeichnet ist,
• für eine gewünschte Mittenfrequenz $F_{n.p}$, Berechnung des Rangs n des "bin" $Z_n$ der Fourier-Transformation FFT, der direkt darunter liegt,
• Berechnung der realen Zahl x zwischen 0 und 1, die den Wert $(F_{n.p} - 1.5625 n)/1.5625$ hat, und Auswahl von zwei komplexen Zahlen z0(x) und z1(x), die Funktionen von x sind,
• Bestimmung des Ausgangs des Filters durch z0(x)Zn + z1(x)Zn+1.

5. Verfahren nach Anspruch 2, **dadurch gekennzeichnet, dass** es einen Schritt der Verfeinerung durch quadratische Regression des Werts der zwei gefundenen Maxima enthält.

6. Verfahren nach Anspruch 2, **dadurch gekennzeichnet, dass** der Schritt der Tiefpassfilterung (600) mit einem Tiefpassfilter mit linearer Phase mit einer ungeraden Zahl von Koeffizienten durchgeführt wird.

Fréquence

$F_{N-1}$

1

$F_0$

Sans Doppler    Doppler Max    Doppler Min

0

Temps

FIG.1

Signal complexe d'entrée     **100**

0    P-1       N bancs de P filtres suivis de détecteurs quadratiques

0      1      2              N -1

P Sommateurs à N entrées chacun

| 0 | 1 | 2 | ▮▮▮▮▮▮▮▮▮▮▮▮▮▮▮▮▮▮▮▮▮▮ | P-1 |
|---|---|---|---|---|

**200**

Détection des deux plus grands maxima parmi P

**300**     M      position_M     m      position_m

Validation / affinage de la valeur de position_M    2

Ligne à retard contenant les T+1
dernières paires M/position_M

| t-T | ▮▮▮▮▮ | t-2 | t-1 | t |
|---|---|---|---|---|

2    a

     2     2     2     2     2     b

Prédiction pondérée de position_M     **400**

**500**    Choix final de la
position à utiliser

Commutateur

Filtre passe-bas    Conversion
de position
en Doppler

Valeur finale du Doppler lissé     **600**

# FIG.2

FIG.3

FIG.4

FIG.5

Meilleure approximation parabolique

Position corrigée
du maximum

## FIG.6

## FIG.7

## FIG.8

FIG.9

FIG.10

**EP 1 961 138 B1**

**RÉFÉRENCES CITÉES DANS LA DESCRIPTION**

**Documents brevets cités dans la description**

- WO 2005055442 A